# EUROPÄISCHE PATENTANMELDUNG

(11) **EP 1 739 398 A1**
(43) Veröffentlichungstag der Anmeldung: **03.01.2007**
(21) Anmeldenummer: 06012804.8
(22) Anmeldetag: 22.06.2006
(51) Int. Cl.: G01G 19/12

(54) **Vorrichtung für einen einachsigen Anhänger**

(30) Priorität: 29.06.2005 DE 102005030232
(71) Anmelder: Amazonen-Werke H. Dreyer GmbH & Co. KG, 49205 Hasbergen (DE)
(72) Erfinder: Kleine-Hartlage, Hubertus, 49186 Bad Iburg (DE)

(57) **Zusammenfassung**

Wiegevorrichtung für einen einachsigen Anhänger mit einem Fahrwerksrahmen, auf dem ein Vorratsbehälter, Bunker etc. vorzugsweise mit einer Verteil- und Dosiereinrichtung angeordnet ist, einer Laufräder aufweisenden Achse, einer am Fahrwerksrahmen angeordneten Zugdeichsel mit Zugöse, wobei zwischen der Achse und dem Fahrwerksrahmen zwei beabstandet zueinander angeordnete Abstützelemente mit jeweils einem Wiegezellenelement angeordnet sind, wobei ein drittes Wiegezellenelement zwischen der Zugdeichsel und der Zugöse angeordnet ist. Um eine einfache Anordnung und auch Nachrüstung des Wiegezellenelementes zur Schaffung einer Wiegevorrichtung für einen einachsigen Anhänger vorzuschlagen, ist vorgesehen, dass das dritte Wiegezellenelement als Flanschadapter die Flanschverbindung zwischen der Zugöse und der Zugdeichsel bildet.

## Beschreibung

Die Erfindung betrifft eine Wiegevorrichtung für einen einachsigen Anhänger gemäß des Oberbegriffes des Patentanspruches 1.

Eine derartige Wiegevorrichtung ist durch die DE 101 54 733 A1 bekannt. Das Wiegezellenelement dieser Wiegevorrichtung ist mittels eines zwischen der Zugdeichsel und der Zugöse angeordneten Kipphebelelement zwischen dem Kipphebelelement und der Zugdeichsel angeordnet. Die Ausgestaltung der Wiegevorrichtung mit dem Kipphebelelement, welches auf die Zugöse wirkt, ist relativ aufwendig.

Durch die DE 101 54 736 A1 ist eine weitere Wiegevorrichtung für einen einachsigen Anhänger bekannt, bei welchem das Wiegezellenelement in integrierter Weise in der Zugöse angeordnet ist. Die Anordnung des Wiegezellenelementes innerhalb der Zugöse ist relativ aufwendig, weil die Zugöse entsprechend bearbeitet werden muss, um das Wiegezellenelement in integrierter Weise in die Zugöse anordnen zu können. Auch müssen für verschiedene Baugrößen des einachsigen Anhängers mit unterschiedlichen Tragkräften verschiedene Zugösen bei deren Fertigung vorgehalten werden.

Der Erfindung liegt die Aufgabe zugrunde, eine einfache Anordnung und auch Nachrüstung des Wiegezellenelementes zur Schaffung einer Wiegevorrichtung für einen einachsigen Anhänger vorzuschlagen.

Diese Aufgabe wird erfindungsgemäß dadurch gelöst, dass das dritte Wiegezellenelement als Flanschadapter die Flanschverbindung zwischen der Zugöse und der Zugdeichsel bildet. Infolge dieser Maßnahmen wird das dritte Wiegezellenelement als Verbindungselement zwischen der Zugöse und der Zugdeichsel geflanscht. Hierdurch gibt sich eine einfache Ausgestaltung des Wiegezellenelementes zur Schaffung einer Wiegevorrichtung, wobei das Wiegezellelement ohne zusätzliche Bauteile an die Flanschflächen der Zugöse und der Zugdeichsel angeflanscht wird, so dass das Wiegezellenelement selbst die Verbindung zwischen der Zugöse und der Zugdeichsel bildet.

Diese einfache Anordnung ergibt sich dadurch, dass das Wiegezellenelement jeweils unmittelbar an die Flanschstelle der Zugöse und der Flanschstelle der Zugdeichsel angeflanscht ist. Hierbei bildet das Wiegezellenelement die Flanschverbindung zwischen der Zugöse und der Zugdeichsel.

Um das Wiegezellenelement zwischen die Zugöse und Zugdeichsel anflanschen zu können, ist vorgesehen, dass das Wiegezellenelement zwei gegenüberliegende Flanschflächen aufweist.

Eine einfache Befestigung der Zugöse und der Zugdeichsel an dem Wiegezellenelement wird dadurch erreicht, dass in dem Wiegezellenelement im Bereich der Flanschflächen Gewindebohrungen angeordnet sind, dass in diese Gewindebohrungen Schrauben zur Befestigen der Zugöse und der Zugdeichsel an dem Wiegezellenelement einschraubbar sind.

Die Anordnung des Wiegezellenelementes zur Schaffung der Wiegevorrichtung bei einem einachsigen Anhänger zeichnet sich dadurch aus, dass das Wiegezellenelement als Zwischenadapter zwischen der Zugöse und der Zugdeichsel ausgebildet ist.

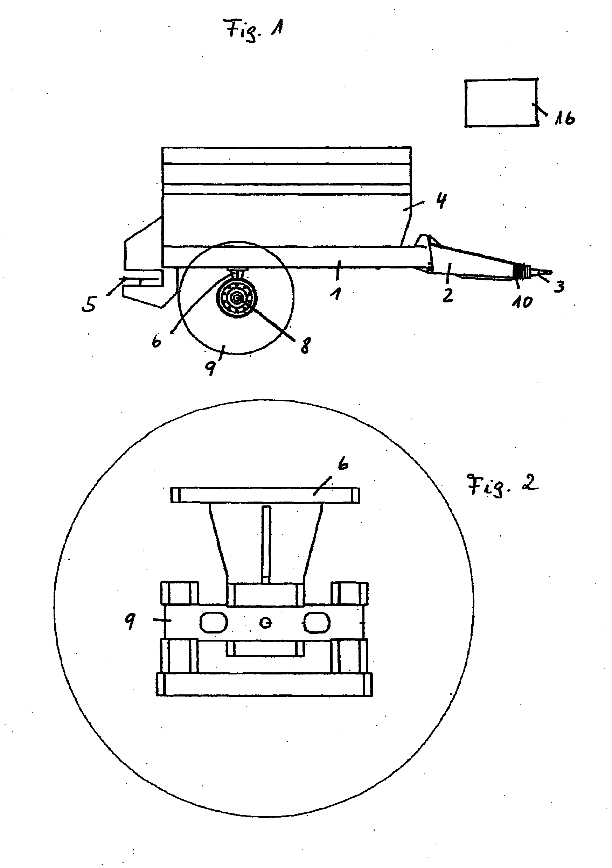

Weitere Einzelheiten der Erfindung sind den übrigen Unteransprüchen, der Beispielbeschreibung und den Zeichnungen zu entnehmen. Hierbei zeigen
- Fig. 1: einen einachsigen Anhänger mit der erfindungsgemäßen Anordnung des Wiegezellenelementes in Seitenansicht und Prinzipdarstellung,

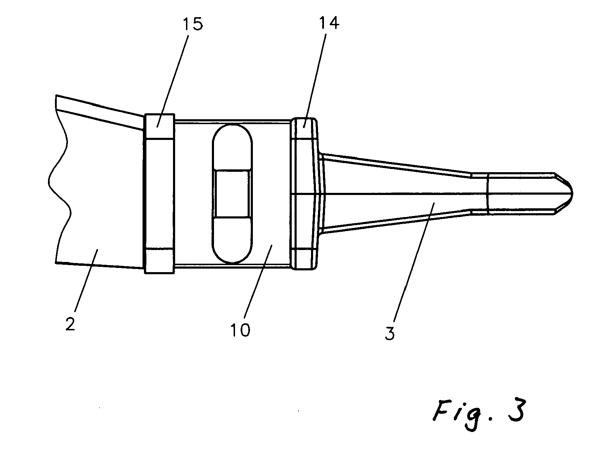

- Fig. 2: ein zwischen Fahrwerksrahmen und Achse angeordnetes Wiegezellenelement in vergrößerter Darstellung und in Prinzipdarstellung,
- Fig. 3: die Anordnung des Wiegezellenelementes zwischen der Zugdeichsel und der Zugöse in vergrößerter Darstellung und in Seitenansicht,

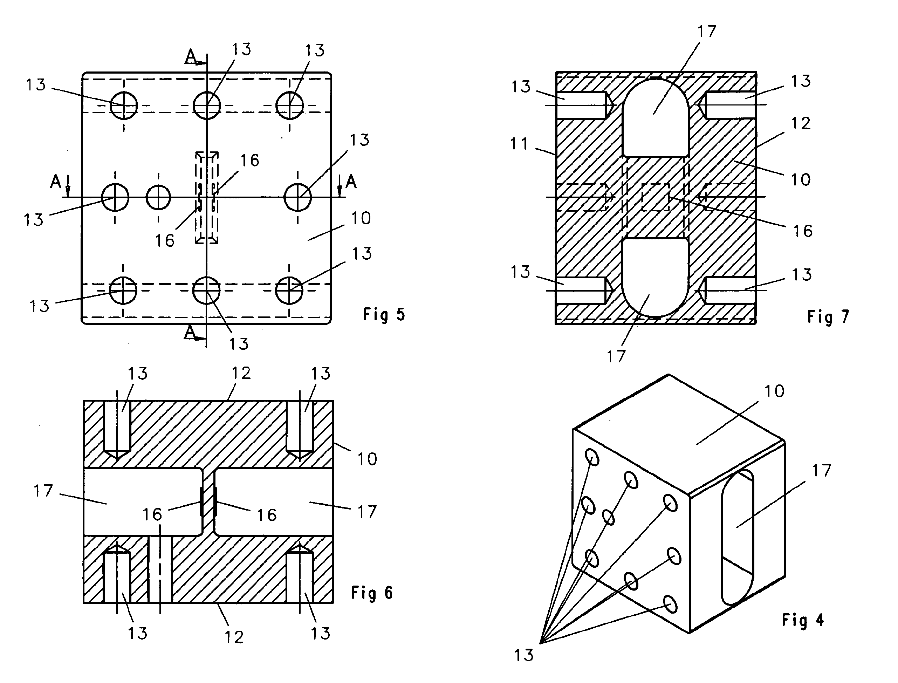

- Fig. 4: das Wiegezellenelement in perspektivischer Darstellung,
- Fig.5: das Wiegezellenelement in der Ansicht V - V,
- Fig. 6: das Wiegezellenelement im Schnitt VI - VI und
- Fig. 7: das Wiegezellenelement im Schnitt VII - VII.
Der einachsige Anhänger weist den Fahrwerksrahmen 1 mit der Zugdeichsel 2 und der Zugöse 3 zur Ankupplung des Anhängers an ein Zugmaul eines Zugfahrzeuges, beispielsweise eines Ackerschlepper etc. auf. Im Ausführungsbeispiel ist der einachsige Anhänger als Großflächendüngerstreuer ausgebildet. Der einachsige Anhänger weist den Vorratsbehälter 4 mit einer nicht näher dargestellten Förder- und Dosiereinrichtung auf, welche das sich im Vorratsbehälter 4 befindliche Material einer Verteileinrichtung, die die motorisch angetriebene Schleuderscheibe 5 aufweist, zuführt.

Der Fahrwerksrahmen stützt sich über zwei Achsböcke 6 auf der mit den Laufrädern 7 bestückten Achse 8 auf. Zwischen jedem Achsbock 6 und der Achse 8 ist ein Wiegezellenelement 9 eingespannt. Somit sind also der Achse 8 zwei Wiegezellenelemente 9 zugeordnet. Ein drittes Wiegezellenelement 10 ist zwischen der Zugdeichsel 2 und der Zugöse 3 angeordnet. Das dritte Wiegezellenelement 10 weist zwei gegenüberliegende Flanschflächen 11 und 12 auf. In dem Bereich der Flanschflächen 11 und 12 sind auf jeder Weise mehrere Gewindebohrungen 13 angeordnet. Diese Gewindebohrungen 13 sind deckungsgleich mit dem in der Flanschelement 14 der Zugöse 12 und in dem Flanschelement 15 der Zugdeichsel 12 angeordnete Bohrungen. In die Gewindebohrungen 13 des Wiegezellenelementes 10 sind Schrauben zum Befestigen der Zugöse 3 und der Zugdeichsel 2 an dem Wiegezellenelement 10 einschraubbar. Das Wiegezellenelement 10 ist als Zwischenadapter zwischen der Zugöse 3 und der Zugdeichsel 2 ausgebildet. Somit bildet das dritte Wiegezellenelement 10 als Flanschadapter die Flanschverbindung zwischen der Zugöse 3 und der Zugdeichsel 2. Das Wiegezellenelement 10 ist jeweils unmittelbar an die Flanschstelle 14 der Zugöse 12 der Flanschstelle 15 der Zugdeichsel 2 angeflanscht, wie Fig. 3 zeigt. Somit bildet das Wiegezellenelement 10 die Flanschverbindung zwischen der Zugöse 3 und der Zugdeichsel 2.

In dem Wiegezellenelement 10 ist die Messzelle 16 in der in dem Wiegezellenelement 10 angeordneten Aussparung 17 angeordnet und über geeignete Übertragungsleitungen mit einem Bordcomputer 16 verbunden. In dem Bordcomputer 16 ist die Auswerteelektronik enthalten, mittels welcher aufgrund der von dem Wiegezellenelement übermittelten Messwerte das sich im Vorratsbehälter 4 befindliche Gewicht bzw. das ausgebrachte Material ermittelbar ist.

## Patentansprüche

1. Wiegevorrichtung für einen einachsigen Anhänger mit einem Fahrwerksrahmen, auf dem ein Vorratsbehälter, Bunker etc. vorzugsweise mit einer Verteil- und Dosiereinrichtung angeordnet ist, einer Laufräder aufweisenden Achse, einer am Fahrwerksrahmen angeordneten Zugdeichsel mit Zugöse, wobei zwischen der Achse und dem Fahrwerksrahmen zwei beabstandet zueinander angeordnete Abstützelemente mit jeweils einem Wiegezellenelement angeordnet sind, wobei ein drittes Wiegezellenelement zwischen der Zugdeichsel und der Zugöse angeordnet ist, **dadurch gekennzeichnet, dass** das dritte Wiegezellenelement (10) als Flanschadapter die Flanschverbindung zwischen der Zugöse (3) und der Zugdeichsel (2) bildet.

2. Wiegevorrichtung nach Anspruch 1, **dadurch gekennzeichnet, dass** das Wiegezellenelement (10) jeweils unmittelbar an die Flanschstelle (14) der Zugöse (3) und der Flanschstelle (15) der Zugdeichsel (2) angeflanscht ist.

3. Wiegevorrichtung nach einem oder mehreren der vorstehenden Ansprüche, **dadurch gekennzeichnet, dass** das Wiegezellenelement (10) die Flanschverbindung zwischen der Zugöse (3) und der Zugdeichsel (2) bildet.

4. Wiegevorrichtung nach einem oder mehreren der vorstehenden Ansprüche, **dadurch gekennzeichnet, dass** das Wiegezellenelement (10) zwei gegenüberliegende Flanschflächen (11, 12) aufweist.

5. Wiegevorrichtung nach einem oder mehreren der vorstehenden Ansprüche, **dadurch gekennzeichnet, dass** in dem Wiegezellenelement (10) im Bereich der Flanschflächen (11, 12) Gewindebohrungen (13) angeordnet sind, dass in diese Gewindebohrungen (13) Schrauben zum Befestigen der Zugöse (3) und der Zugdeichsel (2) an dem Wiegezellenelement (10) einschraubbar sind.

6. Wiegevorrichtung nach einem oder mehreren Ansprüchen, **dadurch gekennzeichnet, dass** das Wiegezellenelement (10) als Zwischenadapter zwischen der Zugöse (3) und der Zugdeichsel (2) ausgebildet ist.
